## Europäisches Patentamt

## European Patent Office

## Office européen des brevets

(19)

(11) Veröffentlichungsnummer: **0 126 306**
**B1**

(12) # EUROPÄISCHE PATENTSCHRIFT

(45) Veröffentlichungstag der Patentschrift:
08.04.87

(21) Anmeldenummer: **84104463.9**

(22) Anmeldetag: **19.04.84**

(51) Int. Cl.⁴: **F 16 L 11/12,** G 02 B 5/128

(54) Schlauch, insbesondere Betankungsschlauch.

(30) Priorität: **21.04.83 DE 8311837 U**

(43) Veröffentlichungstag der Anmeldung:
**28.11.84 Patentblatt 84/48**

(45) Bekanntmachung des Hinweises auf die Patenterteilung:
**08.04.87 Patentblatt 87/15**

(84) Benannte Vertragsstaaten:
**AT BE CH DE FR GB IT LI LU NL SE**

(56) Entgegenhaltungen:
**AT-A-209 647**
**DE-A-1 472 536**
**DE-B-2 365 527**

(73) Patentinhaber: **Continental Gummi- Werke Aktiengesellschaft, Königsworther Platz 1, D-3000 Hannover 1 (DE)**

(72) Erfinder: **Luther, Dietrich, Am Fischerweg 1, D-3540 Korbach (DE)**
Erfinder: **Schwarze, Klaus, Dipl.- Ing., Am Taubenrain 5, D-3540 Korbach (DE)**

## Beschreibung

Die Erfindung bezieht sich auf aus Gummi oder gummiähnlichem Kunststoff bestehende Schläuche, deren Wandungen eingebettete textile und/oder metallische Verstärkungseinlagen enthalten und die beispielsweise in der DE-B-2 365 527 erwähnt sind.

Insbesondere werden solche Schläuche in See- oder Lufthäfen und anderen offenen Verkehrsstätten zum Betanken der abzufertigenden Fahrzeuge in größeren Längen benötigt. Um den besonderen Anforderungen des Betankungsbetriebes mit dem Fördern großer Treibstoffmengen unter hohen Drücken und der stets gegebenen Möglichkeit von Unterdruckeinwirkungen zu genügen, sind die Schläuche üblicherweise mit in meistens mehreren Schichten vorgesehenen textilen oder auch metalliscnen Verstärkungseinlagen und gegebenenfalls noch zusätzlichen Massivdraht-Stützwendeln ausgebildet. Eine unvermeidliche Nebenwirkung der Verstärkungseinlagen ist, daß sie die Schläuche rohrartig versteifen, woraus wiederum die Gefahr entsteht, daß örtliche Druckeinwirkung von außen zu bleibenden Verformungen oder Brüchen der Einlageelemente führen. Solchen schwerwiegenden Druckeinwirkungen sind die Schläuche im Gebrauch aber immer besonders durch überrollende Fahrzeuge wie beispielsweise Gabelstapler, Transport- und andere Versorgungsfahrzeuge ausgesetzt. Diese Gefahr ist auch nicht durch grundsätzliche, strikte Überrollverbote auszuschalten, weil die Schläuche etwa im Nachtbetrieb oder auch schon nur im Halbschatten von den durch andere Vorgänge in Anspruch genommenen Fahrzeugführern oft nicht rechtzeitig oder überhaupt nicht ausgemacht werden können.

Wenn es beispielsweise aus der AT-A-209 647 bekannt ist, biegsame Schläuche durch Zumischen lumineszenter Farbstoffe zu dem elastomeren Außenmantelmaterial nachtleuchtend zu gestalten, verbietet sich eine allgemeine anwendung dieser Maßnahmen allein schon aus Preisgründen. Als weitere Nachteile fallen dazu Erschwernisse bei der Herstellung solcher Schläuche und Beeinträchtigungen in der Mischungsqualität des Schlauchwandungsmaterials ins Gewicht.

Auch die Möglichkeit, reflektierende Folien - wie sie beispielsweise aus der DE-A-1 472 536 bekannt sind - bei Bedarf auf fertige Schläuche aufzubringen, beispielsweise aufzukleben, konnte nicht befriedigen; denn erstens lösen sich solche Folien bei harter mechanischer Beanspruchung leicht wieder von der Schlauchmantelfläche ab und müssen infolgedessen häufig erneuert werden, und zweitens behindern sie das leichte Gleiten des Schlauches auf rauhem Untergrund, da sie den glatten Schlauchaußenmantel geringfügig überragen und daher bremsend wirken.

Der Erfindung liegt daher die Aufgabe zugrunde, einen Schlauch - insbesondere einen Betankungsschlauch - mit völlig glatter Außenwandung zu schaffen, der eine unter allen Umständen ins Auge fallende, vergleichsweise einfach und kostengünstig herstellbare und auch bei harter mechanischer Beanspruchung verschleißfeste optische Kennzeichnung aufweist.

Zur Lösung dieser Aufgabe wird erfindungsgemäß ein Schlauch mit den im Patentanspruch 1 aufgeführten Merkmalen vorgeschlagen. Eine bevorzugte Ausführungsform ist im Patentanspruch 2 angegeben.

Die erfindungsgemäße lichtreflektierende Bandagierung verschafft den Schläuchen in ähnlicher Weise wie etwa die bekannten Gebots- und Verbotsschilder an Verkehrsstraßen eine unbedingt und unter allen Umständen schon auf größere Entfernung ins Auge fallende Markierung. Der Verlauf einer Schlauchleitung auf der Fahrbahn wird also auf jeden Fall unübersehbar deutlich gemacht, ohne daß es dazu der Aufstellung von Hinweis- und Achtungsschildern, Sperrvorrichtungen oder anderer Maßnahmen bedarf. Auf den Gebrauch der Schläuche wirkt sich die Anbringung solcher Bänder oder Streifen in keiner Weise erschwerend aus; denn ihr Biegeverhalten bleibt davon unberührt. Insbesondere vermeidet die enge stoffschlüssige Verbindung und oberflächenbündige Einformung der dünnen Bandagierung an dem Schlauchaußenmantel jegliche das Nachziehen der Schläuche über unebenes Gelände möglicherweise hindernde oder erschwerende Oberflächenerhebungen. Da die Bänder oder Streifen in der vorgesehenen Anordnung bereits bei der Schlauchherstellung als letzter Schritt im Rahmen der üblichen Konfektionierungsarbeiten auf die Schlauchrohlinge aufgebracht und mit dem abschließenden Vernetzungsvorgang in dem Schlauchaußenmantel eingeformt und in haftende Bindung mit dem elastomeren Schlauchwerkstoff gebracht worden sind, ist im späteren Gebrauch der Schläuche das Problem einer auffälligen warnenden Kennzeichnung ein für allemal gelöst.

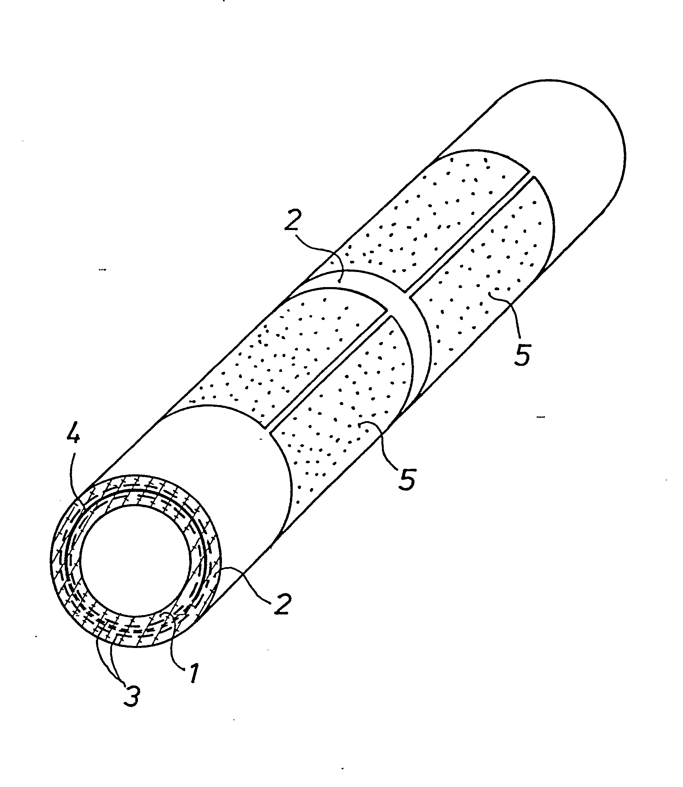

Zum Verdeutlichen der Erfindung ist ein Teilstück eines Flugzeug-Betankungsschlauches als Ausführungsbeispiel in der Zeichnung in perspektivischer Ansicht schematisch dargestellt.

Der gezeichnete Schlauch ist in an sich bekannter Weise mit einer Innenseele 1 aus einer treibstoffbeständigen Kautschukmischung, einem Außenmantel 2 aus einer abriebfesten Kautschukmischung und zwei textilen Verstärkungseinlagen 3 sowie einer zwischen diesen eingebetteten Stahldraht-Stützwendel 4 aufgebaut. Über seine Länge verteilt oder wahlweise auch nur in seinem besonders gefährdeten mittleren Längenabschnitt sind in gegenseitigen Abständen Bänder oder Streifen 5 um den Schlauchumfang herum als Markierungsmanschetten zu nahezu geschlossenen Ringen angebracht. Die Bänder sind aus einer mit eingelagerten Mikroglasteilchen hergestellten Kunststoffolie - beispielsweise Polyvinylchlorid oder einem anderen Thermoplasten - geschnitten und in stoffschlüssiger Verbindung haftend mit dem Kautschuk des Schlauchaußemantels 2 verbunden und in diesen eingeformt.

### Patentansprüche

1. Aus Gummi oder gummiähnlichem Kunststoff bestehender Schlauch, dessen Wandung eingebettete textile und/oder metallische Verstärkungseinlagen (3, 4) enthält und auf dessen Außenmantel (2) lichtreflektierende Substanzen aufgebracht sind, dadurch gekennzeichnet, daß die lichtreflektierenden Substanzen in band- oder streifenförmige Kunststoffolien-Abschnitte (5) eingelagert sind, die stoffschlüssig durch Vulkanisation bzw. Polymerisation mit dem Außenmantel (2) verbunden sind und die den Schlauch etwa ringförmig umfassen und oberflächenbündig in den Außenmantel (2) eingeformt sind.

2. Schlauch nach Anspruch 1, dadurch gekennzeichnet, daß die Kunststoffolien-Abschnitte (5) in regelloser Verteilung eingelagerte Mikroglasteilchen enthalten.

### Claims

1. Flexible hose formed from rubber or rubberlike plastics material, the wall of the flexible hose having textile and/or metallic reinforcing plies (3, 4) embedded therein, and light-reflecting substances are applied to the outer surface (2) of the flexible hose, characterised in that the light-reflecting substances are incorporated in band- or strip-like plastics film portions (3) which are connected to the outer surface (2) in a substance combining manner by means of vulcanisation or polymerisation, the portions surrounding the flexible hose in a substantially annular manner and being moulded into the outer surface (2) so as to be flush with the surface.

2. Flexible hose according to claim 1, characterised in that the plastics film portions (5) contain micro glass particles which are incorporated in an irregular distribution.

### Revendications

1 - Tuyau en caoutchouc ou matière plastique analogue au caoutchouc, dont la paroi renferme des insertions de renforcement textiles et/ou métalliques noyées (3, 4), et sur le revêtement extérieur (2) duquel sont disposées des substances réfléchissant la lumière, caractérisé en ce que les substances réfléchissant la lumière sont incluses dans des morceaux de feuille de matière plastique (5) en forme de bandes ou de rubans, qui sont assemblés au revêtement extérieur (2) par une liaison d'intégration à la matière, par vulcanisation ou polymérisation, et qui entourent le tuyau à peu près en anneaux et sont encastrés par moulage dans le revêtement extérieur (2) à l'affleurement de la surface.

2 - Tuyau selon la revendication 1, caractérisé en ce que les morceaux de feuille de matière plastique (5) contiennent des micro-particules de verre incluses selon une répartition aléatoire.